Europäisches Patentamt

European Patent Office

Office européen des brevets

(19)

(11) EP 1 292 145 A2

(12) **EUROPEAN PATENT APPLICATION**

(43) Date of publication:
**12.03.2003 Bulletin 2003/11**

(51) Int Cl.⁷: **H04N 7/167**

(21) Application number: **02254211.2**

(22) Date of filing: **17.06.2002**

(84) Designated Contracting States:
**AT BE CH CY DE DK ES FI FR GB GR IE IT LI LU
MC NL PT SE TR**
Designated Extension States:
**AL LT LV MK RO SI**

(30) Priority: **31.08.2001 GB 0121199**

(71) Applicant: **SONY UNITED KINGDOM LIMITED
Weybridge KT13 0XW (GB)**

(72) Inventors:
• **Pelly, Jason Charles
Reading, Berkshire RG6 4DU (GB)**
• **Foster, Richard Daniel
Fordingbridge, Hampshire SP6 3LF (GB)**

(74) Representative: **Pratt, Richard Wilson et al
D. Young & Co,
21 New Fetter Lane
London EC4A 1DA (GB)**

(54) **Signal processing**

(57)     A signal processor has an input for receiving an information signal representing material, for example video or audio material. The signal processor is arranged to apply to the material a modification defined by a predetermined algorithm. The modification is perceptible in the material so as to impair the material, the perceptibility of the impairment varying in a predetermined manner in the material.

FIG. 2

**Description**

The present invention relates to signal processing.

The term "material" is used herein to denote: image material which includes, but is not limited to, still and moving images and video; audio material; audio/visual material; and other data material including, but not limited to, text. The material may be represented by information signals which most preferably are digital signals.

It is known to provide material in digital form to users via broadcast signals, on a data storage medium such as tape or disc, by telephone and by networked computers e.g. the internet. Analogue and digital material supplied in such ways is easily copied, especially digital material which can be copied without reduction in quality. Satellite broadcasting systems, and cable systems scramble and/or encrypt video and audio signals and operate conditional access systems to ensure that users pay for the material they receive. It is known to supply extracts of material to users without requiring payment to allow users to decide whether they wish to pay to receive the whole material. However such extracts or trailers are then unprotected.

It is desired to provide information signals representing material and which allow the material to be reviewed whilst protecting the signals from misuse.

According to one aspect of the present invention, there is provided a signal processor having an input for receiving an information signal representing material, the signal processor being arranged to apply to the material a modification defined by a predetermined algorithm and which modification is perceptible in the material so as to impair the material, the perceptibility of the impairment varying in a predetermined manner in the material.

This protects material so that for example a user can review it before deciding to buy it but does not have access to unimpaired material. For video and audio for example, a part of the material may be lightly impaired to allow review but other parts may be heavily impaired to stop misuse of the material. The predetermined variation allows parts of material which are regarded as more significant than other parts to be impaired to a corresponding extent. Also a varying impairment may be more effective in discouraging misuse than a constant impairment.

Preferably the said algorithm is invertible, whereby the modification is removable and the original unmodified material is restorable.

Another aspect of the invention provides a system comprising:

a signal processor having an input for receiving an information signal representing material, the signal processor being arranged to apply to the material a modification defined by a predetermined algorithm and which is perceptible in the material so as to impair the material and which impairment varies in a predetermined manner in the material, wherein the said algorithm is invertible, whereby the modification is removable and the original unmodified material is restorable;

a transmission link for transmitting the information signal representing the modified material to a receiver; and

a receiver including a processor arranged to apply the inverse of the said invertible algorithm to remove the modification and restore the original material.

Thus material which is protected is sent to potential users who can review it. Parts of the material may be lightly impaired to allow review and other parts heavily impaired to prevent misuse.

Preferably, the system further includes a conditional access system to which the receiver is linked, the receiver being selectively enabled by the conditional access system to allow removal of the modification.

A further aspect of the invention provides a system comprising:

a transmission link for transmitting an information signal representing material to a receiver, the transmission link including apparatus for securing the signal against unauthorised access thereto; and

a receiver including a signal processor having an input for receiving the information signal representing material, the signal processor being arranged to apply to the material a modification defined by a predetermined algorithm and which is perceptible in the material so as to impair the material and which impairment varies in a predetermined manner in the material;

the system further including a conditional access system to which the receiver is linked, the receiver being selectively enabled by the conditional access system to disable the application of the modification.

In this aspect the modification is made at the receiver under the control of the conditional access system.

The invention also provides an information signal, a computer program and methods corresponding to the above aspects of the invention as set out in the accompanying claims.

For a better understanding of the present invention, reference will now be made by way of example to the accompanying drawings in which:

Figure 1 is a schematic diagram of a satellite broadcast system;
Figure 2 is a schematic diagram of a set-top box and a display device for use in the system of Figure 1;
Figures 3A and B are timelines illustrating alternative modifications of a signal producable by the system of Figures 1 and 2;
Figure 4 is a flow diagram illustrating an aspect of the operation of the set top box of Figure 2;
Figure 5 is a schematic diagram of an alternative set-top box and a display device for use in the system of Figure 1;
Figure 6 is a flow diagram illustrating an aspect of the operation of the set top box of Figure 5;
Figure 7 is a flow diagram of a method of modifying material; and
Figures 8 to 21 are schematic diagrams of a system and method for applying modifications to, and removing modifications from a video signal.

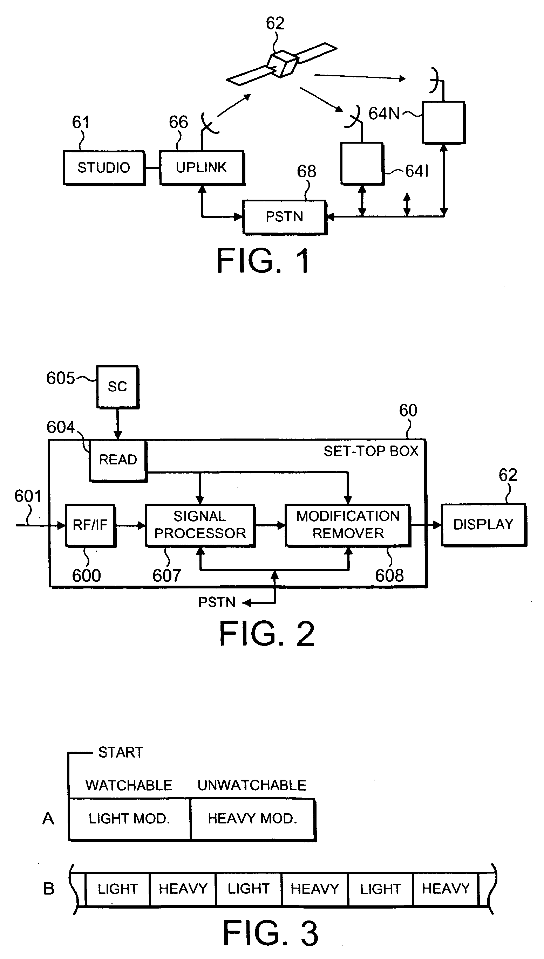

Referring to Figure 1 video and audio signals are sent from a studio 61 to an uplink station 66 of a satellite broadcast system including at least one satellite 62, which broadcasts to multiple receivers 64I to 64N. The receivers are linked by a communications network to a control centre which, in this example, is also the uplink station 66 but may be separate therefrom but in communication with it. The communications network may be the public switched telephone network PSTN 68 or any other suitable network. In this example the video and audio signals are compressed, for example in accordance with MPEG or any other suitable compression system. In a conventional satellite broadcast system, a conditional access system is provided by which users pay to view and/or listen to video and/or audio material. The compressed signals delivered to the receivers are scrambled and/or encrypted. The receivers include descrambling and/or decryption systems, which are activated via the network 68 when the user pays for the material. Payment may be made via the network 68. Activation may include the secure provision of a decryption key and other data. The key and other data may be provided on a smart card and/or via the network 68. Conditional access systems are well known and embodiments of the invention use such systems in conventional ways.

Figure 2 schematically illustrates a set top box 60 for use in the system of Figure 1. The set top box has an input 601 for receiving signals from a receiving antenna (not shown). An RF/IF signal processor 600 as is conventional provides demodulated compressed audio and video signals to a signal processor 607, which, amongst other functions, controls the user's access to the signals. The control of access by the conventional conditional access system utilises for example a smart card which stores decryption keys and the link to the network 68 which is used to ensure the user pays for certain programmes and enables access to a programme once paid for. In a conventional system the signal processor 607 descrambles and/or decrypts and decompresses the video and audio signals.

**First example.**

In accordance with a first example of the present invention, at least the video signal is not scrambled and/or encrypted, but instead a visible modification is applied to the video signal before it is transmitted. The modification is preferably applied at the studio 61. The visible modification is defined by an invertible algorithm such that the original unmodified video can be restored by removal of the modification. The modification is robust in that it cannot easily be removed by an unauthorised person who does not have access to the invertible algorithm and its parameters without damaging the video. Examples of such invertible algorithms will be given hereinbelow. In a most preferred embodiment of the invention, the modification varies in a predetermined manner as set out in at least one of the following options:

a) the modification varies in visibility with time during the video signal;
b) the modification varies in position within the frames of the video signal with time;
c) the modification varies in extent within the frames of the video signal with time;
d) the modification varies in shape or configuration within the frames of the video signal with time.

The set top box of the present example of the invention includes within the signal processor 607 or as a separate processor 608, a mechanism for removing the modification and restoring the original video if the user pays for a programme. The monitoring of payment and the provision of parameters needed to remove the modification and restore the original video are provided to the processor 607 or 608 using the conventional conditional access system. The removal of the modification and the restoration of the video may be done by software or may be done by dedicated hardware. The software may be provided to the set top box in any manner conventional in satellite broadcast systems.

Figures 3A and B illustrate two possible ways of applying modifications to a video signal. Many other ways are possible and will be apparent to readers.

In Figure 3A, a user receives a programme which for the first 5 minutes has a modification which is visible (denoted "light" in the Figure)but does not impair the image to the extent it is unwatchable. That allows the user time to decide whether they are sufficiently interested in the programme to pay to view the whole of it. After the first 5 minutes (or any other interval chosen by the broadcaster) the visibility and/or extent of the modification renders the video unwatchable (denoted "heavy" in the figure). If the user pays for the programme, then the user's set top box is enabled to remove the modification.

In Figure 3B, a programme has a modification which alternates between watchable and unwatchable. In the example shown, the alternation is in a regular cycle with a cycle time of 10 minutes (or any other interval chosen by the broadcaster). The alteration could be irregular. For example some programmes have a main event and several subsidiary events. Subsidiary events may be subject to a modification which is such that the event is watchable but impaired to encourage a user to pay, whilst the main event is modified so as to be unwatchable so the user must pay to view it.

Some parts of a broadcast, e.g. advertisements, also known as commercial messages, are not subject to any impairment.

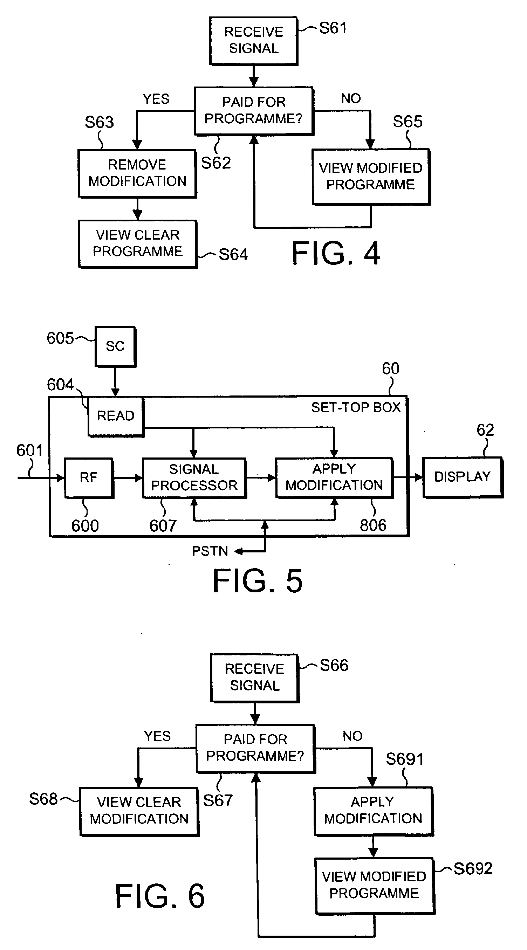

Figure 4 is a flow diagram illustrating one aspect of the operation of the set top box. A signal is received (S61). If the programme represented by the signal has been paid for by the user, (S62), then the set top box is enabled to remove the modification (S63) and the user views (S64)a clear image. If the programme has not been paid for the modification is not removed (S65).

### Second Example

In the second example, the signals broadcast by the satellite are scrambled and/or encrypted in the manner conventional in such systems and the modification in accordance with the present invention is made at the set top box. Thus as shown in Figure 5, the set top box 60 has an input 601 for receiving signals from a receiving antenna (not shown). An RF signal processor 600 as is conventional provides demodulated compressed audio and video signals to a signal processor 607, which, amongst other functions, controls the user's access to the signals. The control of access by the conventional conditional access system utilises for example a smart card which stores decryption keys and the link to the PSTN 68 which is used to ensure the user pays for certain programmes and enables access to a programme once paid for. The processor 607 descrambles and/or decrypts the received signals. The set top box additionally has a processor 806 which applies a visible modification to the signals which are displayed if the user does not pay for the programme represented by the signals. The processor 806 may be incorporated in the processor 607. The broadcast signal includes data or flags which indicate to the set top box which programmes or parts of programmes are to be modified and the degree of modification, e.g. heavy or light as shown in Figure 3. Such data or flags is protected in the signal in known manner e.g. by encryption and/or other data security techniques.

Referring to Figure 6, a signal representing a programme is received (S66). If the user has paid for the programme (S67), then the visible modification is not applied and the user views a clear programme (S68). If the user does not pay for the programme, then the modification is applied (S691) so that the viewer views the impaired programme (S692). The modification applied is the same as described above with reference to the first example.

The application of the modification may be done by software or by hardware. The software may be provided to the set top box in any manner conventional in satellite broadcast systems. In this second example, the modification is either applied or not applied and therefore it does not need to be in accordance with an invertible algorithm.

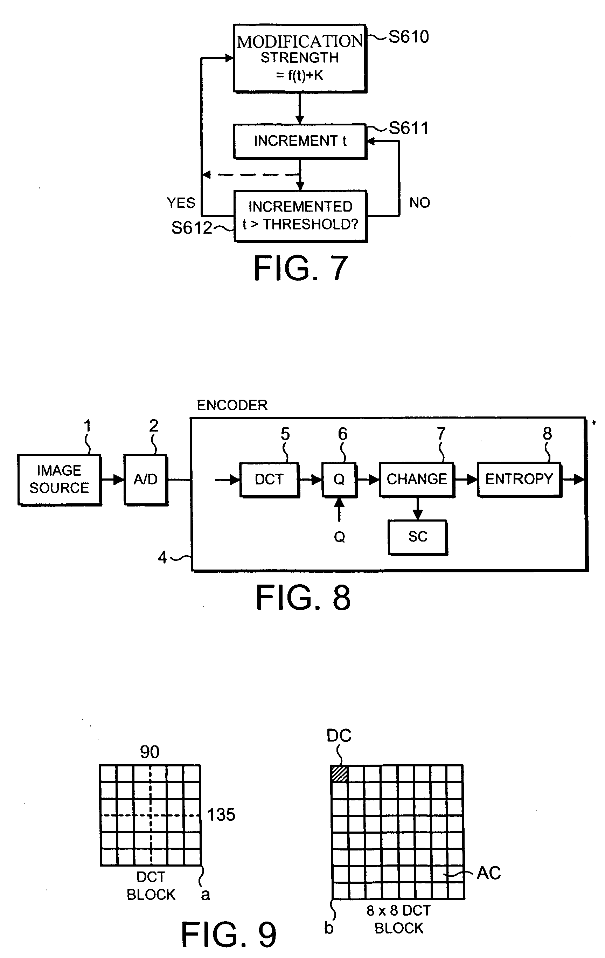

Referring to Figure 7, an alternative form of modification is illustrated. This form is applicable to both examples. The modification (S610) includes a parameter termed "strength" which defines the visibility of the modification. The strength is a function of time (t) and a constant k which defines a minimum strength. As time increases (S611), the strength increases; the increase may be continuous, (S611 + S610) being linear or non-linear. In a variant (S612), the strength increases non-continuously with time. The increase is in steps with a constant value between steps, the steps being defined by increments of time equal to a given threshold.

In the second example, the broadcast signal includes data or a flag which indicates which parts of a programme are to be subject to modification. Certain parts of a programme e.g. advertisements may not be modified at the set top box.

### Applying a modification.

Modifications may be applied to material in various ways. Examples are described in copending UK applications: 0029850.5 attorney reference I-00-147 p10145 S00P5237GB00; and 0121197.8 attorney reference I-00-147A P10145GBP SO0P5237 and 0029852.1,I-00-146, P10146GB S00P5241GB00.

For a better understanding of an example of a method for modifying and unmodifying material, reference will now be made by way of example to the accompanying drawings in which:

Figure 8 is a schematic block diagram of a video signal processor embodying the invention;
Figure 9 explains how an image is changed by the processing of the system of Figure 1;

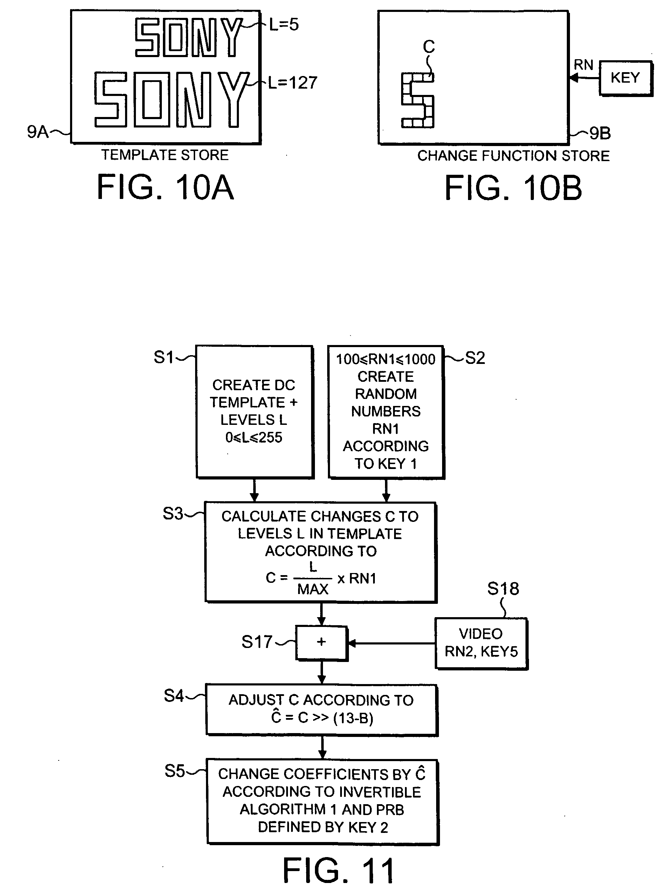

Figures 10A and 10B schematically illustrate the contents of frame stores of the system of Figure 1;

Figure 11 is a flow chart illustrating the processing of DC transform coefficients;

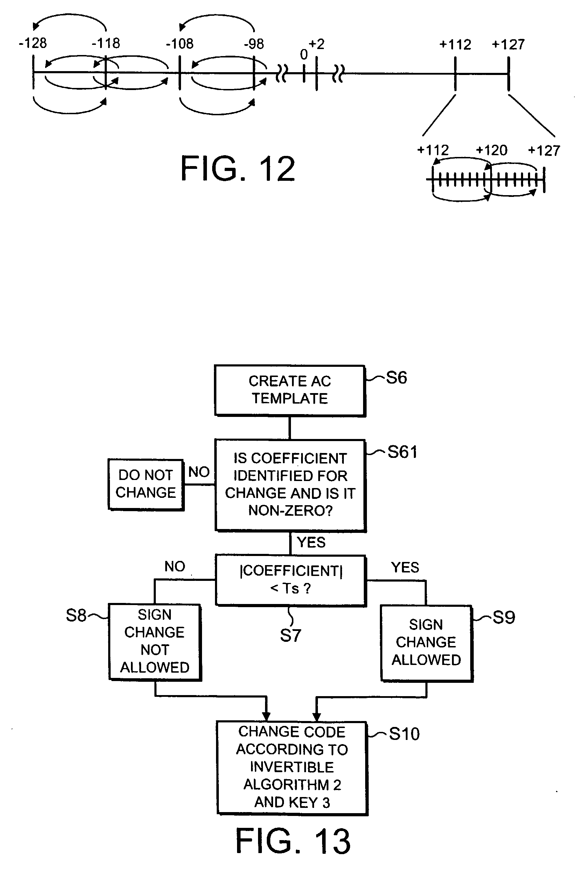

Figure 12 illustrates the encoding of DC coefficient values;

Figures 13, 14, 15 and 16 are flow charts illustrating the processing of AC transform coefficients;

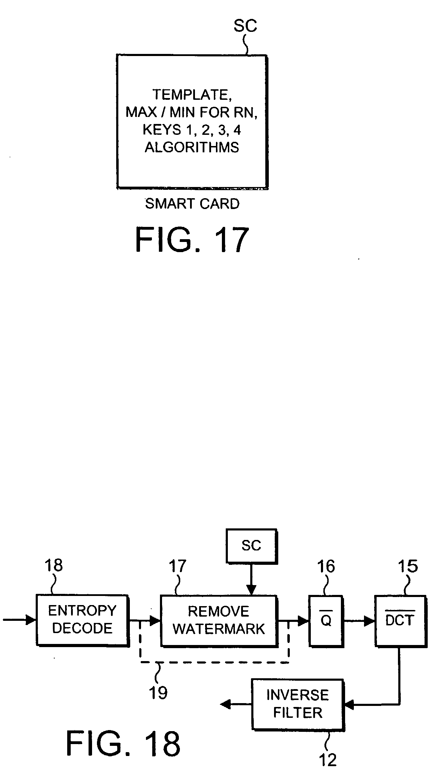

Figure 17 is a schematic diagram of a smart card;

Figure 18 is a schematic block diagram of a decoder embodying the invention;

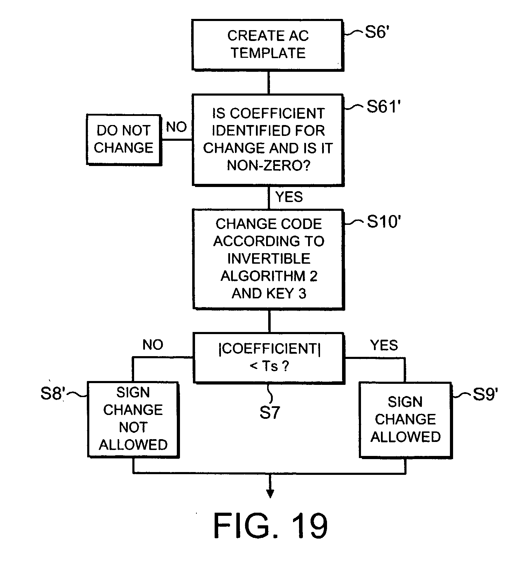

Figure 19 is a schematic flow diagram corresponding to Figure 6 illustrating the restoration of AC coefficient values;

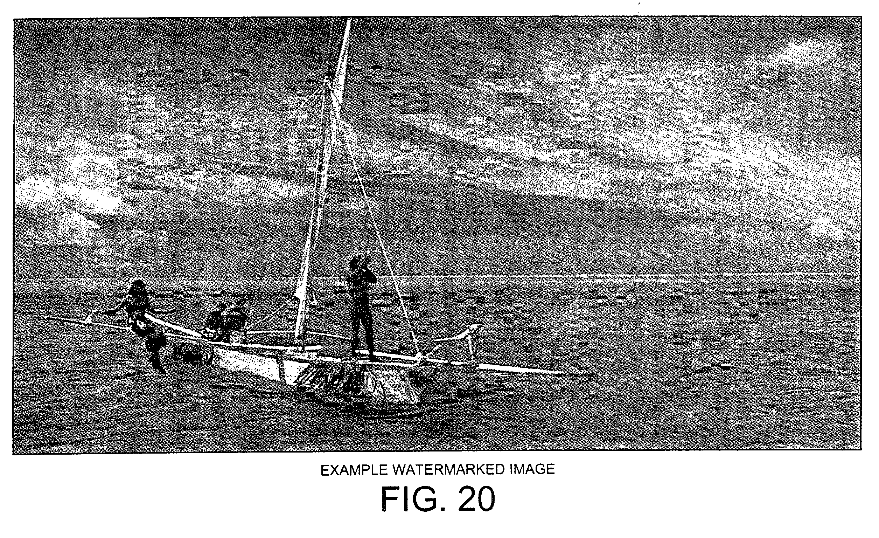

Figure 20 an example of a watermarked image produced in accordance with the invention; and

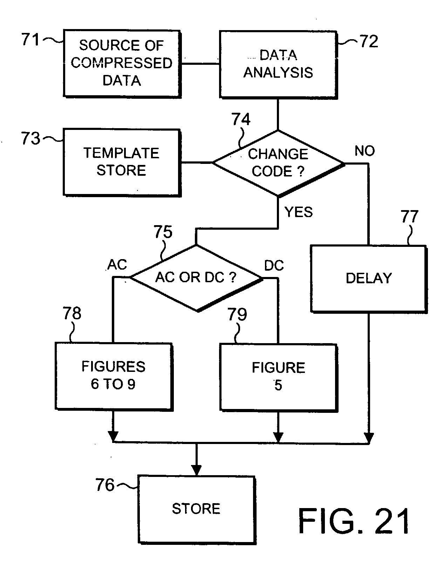

Figure 21 is a schematic flow diagram of an illustrative system in accordance with the invention for processing video from a source of compressed video.

Overview

The examples described hereinafter apply modifications, herein referred to as a watermark, to an image. Figure 13 is an example of a watermarked image produced by an embodiment of the invention.

Encoder, Figure 8.

Figure 8 is an example of an encoder. The encoder of Figure 8 is for example a high definition camera/recorder which includes an image compression system 4 The compressor 4 may comprise features additional to those shown as will be apparent to those skilled in the art. The encoder comprises a source 1 of a colour analogue image and an analogue to digital converter and processor 2 which samples the image. The processor 2 also filters the image..

Each frame of digital samples represents a spatial domain image. The frames are transformed to the DCT domain by a transformer 5. As shown in Figure 9a, each transformed frame may comprises 90 by 135 DCT blocks, each block comprising 8 by 8 DCT coefficients as shown in Figure 9b. Each DCT block has one DC coefficient denoted DC in Figure 9b and 63 AC coefficients, one example of which is denoted by AC in figure 9b.

The DCT coefficients are quantised in a quantiser, the quantisation being controlled by a control value Q in known manner. In the absence of watermarking, the frames of quantised DCT coefficients are entropy encoded in an entropy encoder 8 in known manner. The entropy encoding in this example includes encoding using Huffman encoding. The entropy encoded quantised coefficients are in this example recorded in known manner on a tape: that is not shown in Figure 8. Recording could be on other recording media, for example discs. The recorded compressed video is sent to the uplink station of Figure 1 on tape or by a transmission channel.

Modifying the quantised DCT Coefficients to apply the watermark.

The encoder has a change processor 7 which modifies the quantised luminance (Y) DCT coefficients to apply the watermark. The following assumes by way of example that the quantised DCT coefficients are represented by n bit numbers where n is in the range 8 to 14; that is DC coefficients may have 8 to 14 bits; and AC coefficients have 14 bits. For ease of description the following refers to n bit numbers.

Defining the form of the watermark.

Referring to Figure 10A and to Figure 20, the form of the watermark is defined by a bit map stored in a frame store 9A of the change processor 7. The bit map contains data selecting the DCT blocks in which coefficients are to be changed to apply the watermark. For example a bit value 0 in a location on the store 9A indicates the a DCT block in a corresponding location in the image is not to be changed whereas bit value 1 selects the block for change.

In a preferred embodiment there are at least two such stores. One selects DCT blocks in which AC coefficients are to be changed and the other selects blocks in which the DC coefficient is to be changed. Most preferably the selections made by the two stores are independent. The stores 9 are referred to hereinafter as template stores. The following description assumes that DC coefficients are processed differently to AC coefficients. In an alternative embodiment only DC coefficients are changed to apply a watermark. In a further embodiment only AC coefficients are changed to apply a watermark.

The watermark may vary in image space with time in a video sequence. That is the watermark may vary in position in a frame and/or in extent in a frame and/or in shape or configuration. One way of doing that is to provide a plurality of bitmaps (also referred to herein as templates) which define watermarks in different positions and/or extents and/or shapes. Additionally or alternatively the different bit maps may define different levels L: see Figure 10B and step S1 of Figure 11, so that the watermark has a varying level of visibility with time. Alternatively, the addressing of a single bitmap may be offset as necessary relative to the frame to be modified to move the watermark. Means are provided for selecting the bit maps. The selection may be dependent on time.

For ease of explanation and ease of illustration, the bit maps shown in Figures 10A and 10B assume that the digital samples have not been shuffled.

Processing DC coefficients, Figures 11 and 12.

Referring to Figure 10B, the change processor 7 has a change function store 9B which stores a change value C for the DC coefficient of each DCT block selected by the bit map in the DC template store 9A.

Referring to Figure 11, the change value C is calculated by the processor 7 in the following way.

S1. The DC template of Figure 10A is created. Different levels L may be specified for different parts of the watermark as illustrated in Figure 10A. L is defined by a 8 bit number and so it has values in the range 0 to 255. In Figure 10A L has values 5 and 127 by way of example for different parts of the template. The levels may be stored in the DC template.

S2. Pseudo random numbers RN1 are generated based on a first key, Key1. The numbers RN1 are constrained within a predetermined range min<=RN1<=max for example 100<=RN1<=1000. A new random number is generated for each DCT block which is to have its DC value changed (as indicated by the DC template).

S3. The change values C are calculated according to

$$C=(L/M). RN1$$

where M is the maximum value which L can take: in this example M=255. The change values are stored in the change store 9B.

Steps S1 to S3 may take place before an image is compressed and watermarked. The adjustment of the change values C by step S4 takes place during compression processing because it depends on the particular quantisation scales applied to the samples during such processing.

S4. The digital change value C is adjusted as follows to produce an adjusted value C^ where

C^ = C>>( 13 - B), where B is the number of bits needed to specify the DC magnitude after quantisation, and >> means right shift in this case (by (13-B) bits). That occurs in both the odd and even channels and results in approximately the same change being applied in both channels. 13 is the number of magnitude bits of a signed 14 bit number, the extra bit being a sign bit.

S5. The quantised DC coefficients are then adjusted by the values C^ according to an invertible algorithm. The quantised DC coefficients each have n bits, where n may differ from DC coefficient to DC coefficient. The change is such that for any coefficient the number n of bits does not change.

Figure 12 illustrates a currently preferred algorithm (algorithm 1)for changing the DC coefficient values. Assume by way of example that C^=10 and n =8 bits so the coefficient has a value in the range -128 to + 127. Starting at -128, the bottom of the range, the range of values is divided into sections each of range 2x10. Sections -128 to -109; -108 to -89; and so on to +111 are shown. The whole range does not divide into an integer number of sections each of range 2x10. Thus there is a top section of +112 to +127.

The levels L and the maximum and minimum values of the number RN1 are selectable. The visibility of the watermark is varied by varying L and/or the maximum and minimum values of the number RN1.

The algorithm operates by swapping a value in the top half of a section with a value in the bottom half. Thus values -128 to -119 swap with values -118 to -109. Thus if a coefficient has an original value -118, before adjustment by C^=10, it is replaced by -128 after adjustment by C^. As another example if an original value is -107, it becomes -97 after adjustment. In the top section +112 to + 127 the same process occurs but the half sections are +112 to +119 and +120 to + 127 and the swapping is as shown in the Figure.

The example given divides the whole range into sections beginning at the bottom (-128) of the range. The division may take place starting at the top (+127) of the range. In a preferred embodiment, the division begins at the top or bottom according to the value of a pseudo randomly generated bit PRB generated based on a key, Key2. PRB may pseudo randomly change for every DC coefficient. The values of the bit PRB are preferably stored in the change store together with C.

When a quantised DC coefficient is produced by the quantiser Q, the processor 7 determines from the change store the value of C applicable to the coefficient and the value of PRB. The processor 7 adjusts the value of C to C^. The value of that coefficient is adjusted according to C^ and the algorithm. Using the example of Figure 12, if the coefficient has an original value of-96 it is replaced by -106.

In summary, the n bit numbers representing the coefficients are members of a set and a said number is modified by transposing it with another member of the set chosen according to the invertible algorithm. As shown in Figure 12, if a number N1 is to be changed by an amount X it is transposed with another member N2 of the set where |N1-N2| = X, except at one end of the range where only a change of less than X is possible.

It will be appreciated from the foregoing that the number of bits is not changed.

S17, S18. The foregoing description may apply to a single frame of a still image. For video with many frames in a clip, the change values C and PRB stored in the store 9B are applied to all the frames in the clip. However in addition, to increase security, a small pseudo random variation RN2 based on a key Key5 is added to the change values C of each frame. The small variation is chosen so that the number of bits does not increase. At step S3, the change store is established and remains fixed for the clip. The small variation is a small pseudo random number e.g. -50<=RN2<=50, and it is added to C just prior to step S4. Each C gets a new value of RN2. The PRBS generating RN2 is *not* reset every frame, so different frames have different sequences of RN2.

Processing AC coefficients, Figures 13 to 16.

S6. An AC template is created. The bit map in the AC template selects the DCT blocks in which AC coefficients are to be changed.

S61. If an AC coefficient is to be changed its value is tested; if it equals zero, no change is made to its value; otherwise it is changed.

S7, S8 and S9.The AC coefficients in the selected blocks are compared with a threshold Ts. If the magnitude of a coefficient is below Ts then its sign may be changed. If the value is greater than Ts the sign must not change. Although it is not essential to the principle of the invention to prevent a sign change in an AC coefficient, it has been found that a sign change for large valued coefficients creates a watermark which is unpleasant.

S10. The numbers representing the AC coefficients are changed according to an invertible algorithm and a key, Key3.

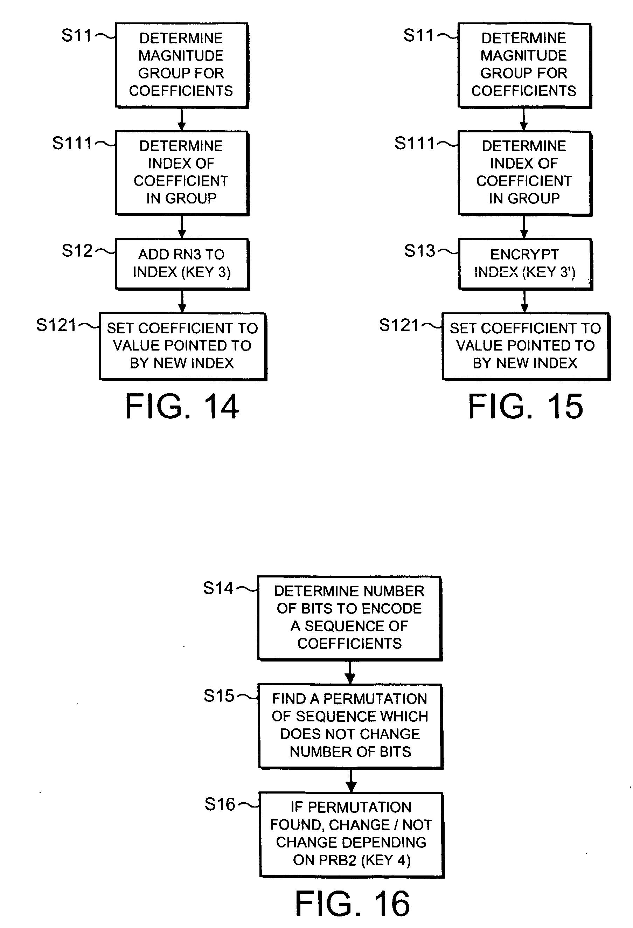

Figure 14 illustrates one example of the invertible algorithm (algorithm 2). The algorithm operates on quantised AC coefficients prior to entropy encoding.

Referring to Table 1, which is a Huffman encoding table and which is attached to the end of this description, the coefficient values are represented by a variable length code VLC and a fixed length code FLC. The VLC specifies which of the groups an AC coefficient lies in. The FLC is an index which indicates which value in the group is equal to the AC coefficient

Step S11 determines which group the coefficient lies in.

Step S111 determines the index of the coefficient in the group.

In step S12 the fixed length code of AC coefficients in blocks selected by the AC template is changed by adding to it a pseudo random number RN3 based on a key, Key3. To ensure that the number of bits does not change the sum "wraps round". For example if the fixed length code is 110 and the RN3 is 010 then the sum wraps round to 000 rather than 1000. If no change of sign is to occur as indicated by steps S7 and S9, then the wrap around is performed so as to preserve the sign of the coefficient.

In Step S121 the coefficient value is set to the value pointed to by the new index.

Figure 15 illustrates another example of the invertible algorithm. The algorithm operates in the same way as Figure 14 except step S12 is replaced by step S13.

In step S13 the fixed length code is encrypted according to an invertible encryption code and a key Key3'. The number of bits is not changed.

Figures 14 and 15 are concerned with changing the value of a coefficient to another value in the same magnitude group.

Figure 16 illustrates an invertible algorithm for changing the order of coefficients. This may be used in addition to the algorithm of Figure 14 or 15.

S14. The number of bits to entropy encode a sequence of AC coefficients is determined.

S15. The change processor 7 attempts to find a permutation of the order of coefficients which does not change the number of bits produced by entropy encoding.

S16. If a permutation is found, then a decision is made to either change the order or not change the order. The decision depends on the value of a pseudo random number PRB2 defined by a key Key4. In this example, the number may have only one bit. In a modification of the process, the change processor finds more than one permutation of the order of coefficients which does not change the number of entropy encoded bits. The permutations, including the original order of coefficients are numbered and in step S16one of the permutations is selected based on pseudo random number PRB2.

In a modification of the process, the AC coefficients in a block are selected for change. In such a block not all coefficients are changed. The selection may be a preset fixed selection or a selection which varies. The selection may be pseudo random based on a key.

Creating watermarked spatial domain images.

The compressed watermarked image may be stored in compressed form on the tape. To view the image it must be decompressed.

Referring to Figure 18, the Figure shows the decoder. The compressed image is entropy decoded (18), dequantised ( 16) and inverse transformed (15). The resulting spatial domain samples represent a watermarked spatial domain image. The samples are inverse filtered (12) to produce an image. Figure 20 is an example of such an image.

It will be noted that a watermark removal processor 17 of Figure 18 is bypassed by bypass 19 for the purpose of viewing the watermarked image.

Removing the Watermark.

Data Carrier, Figure 17

In order to remove the watermark, the decoder must have the following removal data:

The AC and DC templates, levels L, the maximum and minimum values for RN1, the keys 1, 2, 3, 4 and 5 for generating the pseudo random numbers and bits, the algorithms 1 and 2 and the threshold Ts. The keys are generated in the encoder and are not predetermined.

In the currently preferred embodiment, the removal data is stored in a data carrier preferably securely. Most preferably the carrier is a smart card SC. The encoder has an interface via which the change processor downloads the removal data into the smart card SC. The removal data may be transferred to the decoder via the secure conditional access system of the system of Figure 1.

The removal processor 17 of the decoder has a similar interface for receiving the removal data from the smart card SC. or it has an interface for receiving the removal data from the conditional access system.

Removal of changes from the DC coefficients

Referring to Figures 11 and 18, the removal processor 17 downloads the DC template, Key1 and the limits to the range of RN1 from the smart card SC or conditional access system..

S1. The templates and levels L are available from e.g. the smart card.

S2. The removal processor 17 recreates, from the Key1 and the limits, the pseudo random numbers RN1.

S3. The changes C are recalculated from the template, L and RN1 and stored in a change store as shown in Figure 10B.

S4. The adjusted change values C^ are calculated from the stored values of C.

S5. The DC coefficients are restored to their original values by inverting the algorithm with reference to pseudo random bits PRB1 regenerated from key 2.

S17, S18. For video clips, RN2 is regenerated from Key5 and subtracted from C.

Restoring AC coefficients

Referring to Figure 19:

S6'. The AC template is downloaded from the smart card.
S61'. If an AC coefficiemt is to be changed, the coefficient is tested to determine whether or not it has a value of zero. If the value is non zero then they were subject to change at the encoder and thus also at the decoder.
S10'. The AC coefficients are restored to their original values by inverting the algorithm with reference to Key 3.
S7' to S9'. The coefficient values are compared with Ts downloaded from the smart card. That allows the processor to determine which coefficients have a sign change.

Referring to Figures 14 and 15, steps S11 and S111 are followed as in the process of changing the coefficients.

Referring to Figure 14, at S12 RN3 is regenerated from Key3 and is subtracted from the index.

Referring to Figure 15, at S13, the encryption is reversed using Key3'.

Referring to Figure 16;-

S14. The number of bits to entropy encode a sequence is determined.

S15. The change processor 7 attempts to find a permutation of the order of coefficients which does not change the number of bits required to be entropy encoded.

S16. If such a permutation is found, then it is possible that in the change process a decision was made to change the order. The decision depends on the value of the pseudo random number PRB2 defined by Key4.

PRB2 indicates whether the sequence has been changed. If it has, the change is inverted.

Security

The algorithms used to apply the watermark may be common to many different users. Security is provided by:

    a) the keys Key1, 2, 3, 4 and 5 which are chosen and generated by the users;
    b) the levels L which are chosen by the users; and
    c) the limits on RN1 which are chosen by the users.

The sign change threshold may provide some security because it is selectable by the users.
The DC and AC templates are not secure if a visible watermark is applied to an image because the template is a least partially visible in the image.
Smart cards are physically and logically designed to store data securely.

Related system and method

The method and apparatus described herein may be used with the method and system disclosed in copending UK patent application 0029851.3, attorney file P/10406, I-00-153 the disclosure of which is incorporated herein by reference.

**Adding a watermark to video which has previously been compressed.**

The foregoing description applies a watermark to video during the process of compressing the material. However material is available which is compressed but does not have a watermark but it is desirable to add a watermark to it. Figure 21 is a schematic flow diagram of an illustrative system in accordance with the invention for processing video from a source 71 of compressed video. The source 71 may be a video tape player or player and recorder, a disc player or player and recorder, a server or any other source. For ease of explanation, and consistency with the foregoing description, it is assumed that the video has been compressed by a system as shown in Figure 8 but omitting the change processor 7. The compressed video thus is not watermarked.
In this example, the compressed video comprises data encoded according to the coding set out in Table 1 at the end of this description. The data is analysed (72) to:

    1) extract the individual codes. The non-zero coefficients each have the form <VLC> <FLC> as shown in Table 1 DC coefficients are encoded as raw data in n bits;
    2) determine the positions in the bit map of Figure 10 which the codes represent; and
    3) determine other information such as quantisation level of DC coefficients.

The entropy encoded bit stream is a stream of data organised in known manner and from which it is possible to identify the codes in known manner. The ordering of the codes is in a known relationship to the image positions.
A comparator 74 compares the code positions with the bit map stored in a template store 73 to determine whether the code needs to be changed or not.
If a code needs to be changed then step 75 determines whether the code represents an AC or DC coefficient. If the code represents an AC coefficient, then one of the methods of Figures 13 to 16 as described above is used. If the code represents a DC coefficient, then the method of Figure 12 as described above is used.
All the codes, that is both the changed and unchanged codes are stored in a store 76, for example a video tape recorder. The unchanged codes are fed to the store 76 via a delay 77 which compensates for the processing delay of the changed codes so that the order of the codes is unchanged in the examples of Figures 14 and 15.
If a compressed bit stream is required then the bitstream is stored in a store 76 without further processing. If an uncompressed bit stream is required the bitstream is decompressed and then stored.
This process for embedding a watermark in video which is already compressed is advantageous because it does not require the video to be decompressed: that is it does not need to be dequantised and does not need an inverse transform operation.

**Removing the watermark**

The watermark may be removed and the original video restored by the inverse of the method shown in Figure 21. The data from a source 71 is analysed (72) to:

a) extract the individual codes. The non-zero coefficients each have the form <VLC> <FLC> as shown in Table 1 DC coefficients are encoded as raw data in n bits;

b) determine the positions in the bit map of Figure 10 which the codes represent; and

c) determine other information such as quantisation level of DC coefficients.

The entropy encoded bit stream is a stream of data organised in known manner and from which it is possible to identify the codes in known manner. The ordering of the codes is in a known relationship to the image positions.

A comparator 74 compares the code positions with the bit map stored in a template store 73 to determine whether the code was changed or not during embedding

If a code was changed then step 75 determines whether the code represents an AC or DC coefficient. If the code represents an AC coefficient, then one of the methods of Figures 19 and 14 to 16 as described above is used to remove the modification. If the code represents a DC coefficient, then the method of Figure 12 as described above is used for removal..

All the codes, that is both the changed and unchanged codes are stored in a store 76, for example a video tape recorder. The unchanged codes are fed to the store 76 via a delay 77 which compensates for the processing delay of the changed codes so that the order of the codes is unchanged in the examples of Figures 14 and 15.

If a compressed bit stream is required then the bitstream is stored in a store 76 without further processing. If an uncompressed bit stream is required the bitstream is decompressed and then stored.

## Modifications

In the examples of Figures 8 to 21, the video is compressed according to one particular example of a compression system. The invention is not limited to that one example. The invention may be applied to many other compression systems including HDCAM, MPEG, JPEG, Motion JPEG, and DV.

JPEG is mentioned above as an example of a compression system to which the invention may be applied. The examples of the invention aim to embed a watermark in compressed digital information signals without increasing the number of bits used to represent the compressed information signals as compared to the same compressed information signals without the embedded watermark. If the examples of the invention are applied to JPEG, there may be a small change in the number of bits. This is because JPEG uses predetermined control characters which may be accidentally produced by application of the examples of the present invention. If this happens the JPEG algorithm automatically adds an extra byte to avoid this problem. The result may be to increase or decrease the number of bits. Also, to make the modification more visible, a small increase in the number of bits may be acceptable, especially when stored on discs and other non-tape formats.

Although the foregoing description refers to video, the invention is not limited to video. It may be applied to audio, still images and other information signals.

## Table 1.

| VLC Group | Number of FLC Bits | Description |
|---|---|---|
| 0 | 0 | EOB code |
| 1 | 1 | (1)*0, +/- 1 |
| 2 | 2 | (2 to 3)*0, +/- 1 |
| 3 | 3 | (4 to 7)*0, +/- 1 |
| 4 | 4 | (8 to 15)*0, +/- 1 |
| 5 | 5 | (16 to 31)*0, +/- 1 |
| 6 | 6 | (32 to 63)*0, +/- 1 |
| 7 | 0 | (1)*0 |
| 8 | 1 | (2 to 3)*0 |
| 9 | 2 | (4 to 7)*0 |
| 10 | 3 | (8 to 15)*0 |
| 11 | 4 | (16 to 31)*0 |
| 12 | 5 | (32 to 63)*0 |
| 13 | 1 | +/- 1 |
| 14 | 2 | -3 to -2, +2 to +3 |
| 15 | 3 | -7 to -4, +4 to +7 |
| 16 | 4 | -15 to -8, +8 to +15 |
| 17 | 5 | -31 to -16, +16 to +31 |
| 18 | 6 | -63 to -32, +32 to +63 |
| 19 | 7 | -127 to -64, +64 to +127 |
| 20 | 8 | -255 to -128, +128 to +255 |
| 21 | 14 | -8192 to -256, +256 to +8191 |

## Modifications.

The invention has been described by way of example with reference to video signals. It will be appreciated that it may be applied to other signals, for example signals representing still images, and text such as electronic books. It may also be applied to audio signals. An audio signal may be modified by applying an audible modification to it. The modification is preferably such that it impairs the original audio but the original audio is to some extent recognisable. As with the examples given above, the modification is preferably robust and removable to allow the original audio to be restored.

The invention has been described above with reference to a satellite broadcast system. The invention may be applied to terrestrial broadcast systems and to cable systems.

The invention has been described above with reference to video programmes broadcast to many consumers. However the invention may be applied to the transmission of video, audio and/or other data from one business to another business.

**Claims**

1. A signal processor having an input for receiving an information signal representing material, the signal processor being arranged to apply to the material a modification defined by a predetermined algorithm and which modification is perceptible in the material so as to impair the material, the perceptibility of the impairment varying in a predetermined manner in the material.

2. A processor according to claim 1, wherein the said algorithm is invertible, whereby the modification is removable and the original unmodified material is restorable.

3. A processor according to claim 1 or 2, wherein the modification varies in perceptibility with time.

4. A processor according to claim 1 or 2, wherein the modification varies in extent.

5. A processor according to claim 1 or 2, wherein the modification varies in position.

6. A processor according to claim 1 or 2, wherein the processor is arranged to apply a modification to material which modification varies in shape or configuration.

7. A processor according to claim 1 or 2, wherein the perceptibility of the modification increase with time.

8. An information signal representing material, the material having applied thereto a modification which is perceptible in the material so as to impair the perceptibility of the material and which impairment varies in a predetermined manner in the material.

9. An information signal according to claim 8, wherein the modification varies in perceptibility with time.

10. An information signal according to claim 8, wherein the modification varies in extent.

11. An information signal according to claim 8, wherein the modification varies in position.

12. An information signal according to claim 8, wherein the modification varies in shape or configuration.

13. A signal according to claim 8, wherein the perceptibility of the modification increase with time.

14. An information signal according to anyone of claims 8 to 13, wherein the modification is defined by a predetermined algorithm which is invertible whereby the modification is removable and the original unmodified material is restorable.

15. A signal processor for processing an information signal produced by the processor of claim 2, the processor being arranged to apply the inverse of the said invertible algorithm to remove the modification and restore the original material.

16. A system comprising:

    a signal processor having an input for receiving an information signal representing material, the signal processor being arranged to apply to the material a modification defined by a predetermined algorithm and which is perceptible in the material so as to impair the material and which impairment varies in a predetermined manner in the material, wherein the said algorithm is invertible, whereby the modification is removable and the original unmodified material is restorable;
    a transmission link for transmitting the information signal representing the modified material to a receiver; and
    a receiver including a processor arranged to apply the inverse of the said invertible algorithm to remove the modification and restore the original material.

17. A system according to claim 16 further including a conditional access system to which the receiver is linked, the receiver being selectively enabled by the conditional access system to allow removal of the modification.

18. A system comprising:

a transmission link for transmitting an information signal representing material to a receiver, the transmission link including apparatus for securing the signal against unauthorised access thereto; and

a receiver including a signal processor having an input for receiving the information signal representing material, the signal processor being arranged to apply to the material a modification defined by a predetermined algorithm and which is perceptible in the material so as to impair the material and which impairment varies in a predetermined manner in the material;

the system further including a conditional access system to which the receiver is linked, the receiver being selectively enabled by the conditional access system to disable the application of the modification.

**19.** A system according to claim 16, 17 or 18, wherein the modification varies in perceptibility with time.

**20.** A system according to claim 16, 17 or 18, wherein the modification varies in extent.

**21.** A system according to claim 16, 17 or 18, wherein the modification varies in position.

**22.** A system according to claim 16, 17 or 18, wherein the processor is arranged to apply a modification to material which modification varies in shape or configuration.

**23.** A system according to claim 16, 17 or 18, wherein the perceptibility of the modification increases with time.

**24.** A computer program which includes instructions which, when run on a signal processor, configure the processor to operate as the processor of any one of claims 1 to 7.

**25.** A computer program which includes instructions which, when run on a signal processor, configure the processor to operate as the processor of claim 15.

**26.** A method of processing an information signal representing material, the method comprising applying to the material a modification defined by a predetermined algorithm and which modification is perceptible in the material so as to impair the material, the perceptibility of the impairment varying in a predetermined manner in the material.

**27.** A method according to claim 26 wherein the said algorithm is invertible, whereby the modification is removable and the original unmodified material is restorable.

**28.** A method according to claim 26 or 27, wherein the modification varies in perceptibility with time.

**29.** A method according to claim 26 or 27, wherein the modification varies in extent.

**30.** A method according to claim 26 or 27, wherein the modification varies in position.

**31.** A method according to claim 26 or 27, wherein the processor is arranged to apply a modification to material which modification varies in shape or configuration.

**32.** A method according to claim 26 or 27, wherein the perceptibility of the modification increases with time.

**33.** A method of processing an information signal produced by the method of claim 27, comprising applying the inverse of the said invertible algorithm to remove the modification and restore the original material.

**34.** A method comprising:

receiving an information signal representing material applying to the material a modification defined by a predetermined algorithm and which is perceptible in the material so as to impair the material and which impairment varies in a predetermined manner in the material, wherein the said algorithm is invertible, whereby the modification is removable and the original unmodified material is restorable;

transmitting the information signal representing the modified material to a receiver; and

at the receiver applying the inverse of the said invertible algorithm to remove the modification and restore the original material.

**35.** A method according to claim 34 further including selectively enabling the receiver using a conditional access system to allow removal of the modification.

36. A method comprising:

transmitting an information signal representing material to a receiver, the signal being secured against unauthorised access thereto; and
at the receiver, receiving the information signal representing material, and applying to the material a modification defined by a predetermined algorithm and which is perceptible in the material so as to impair the material and which impairment varies in a predetermined manner in the material;
the method further using a conditional access system to which the receiver is linked, the receiver being selectively enabled by the conditional access system to disable the application of the modification.

FIG. 1

FIG. 2

FIG. 3

RECEIVE SIGNAL —S61

YES

S63

PAID FOR PROGRAMME? — S62

NO

S65

REMOVE MODIFICATION

VIEW MODIFIED PROGRAMME

VIEW CLEAR PROGRAMME —S64

FIG. 4

605— SC

604—

60

READ

SET-TOP BOX

62

601

RF

SIGNAL PROCESSOR

APPLY MODIFICATION

DISPLAY

600

607

806

PSTN

FIG. 5

RECEIVE SIGNAL —S66

YES

PAID FOR PROGRAMME? — S67

NO

S691

S68— VIEW CLEAR MODIFICATION

APPLY MODIFICATION

FIG. 6

VIEW MODIFIED PROGRAMME —S692

MODIFICATION
STRENGTH
= f(t)+K ⟩~S610

INCREMENT t ⟩~S611

INCREMENTED
t > THRESHOLD?

YES

S612~

NO

## FIG. 7

ENCODER

IMAGE SOURCE — 1

A/D — 2

DCT — 5

Q — 6

CHANGE — 7

ENTROPY — 8

Q

SC

4~

## FIG. 8

90

135

DCT BLOCK   a

DC

AC

8 x 8 DCT BLOCK

b

## FIG. 9

SONY L=5

SONY L=127

9A

TEMPLATE STORE

## FIG. 10A

C

RN ← KEY

9B

CHANGE FUNCTION STORE

## FIG. 10B

S1 — CREATE DC TEMPLATE + LEVELS L $0 \leqslant L \leqslant 255$

S2 — $100 \leqslant RN1 \leqslant 1000$ CREATE RANDOM NUMBERS RN1 ACCORDING TO KEY 1

S3 — CALCULATE CHANGES C TO LEVELS L IN TEMPLATE ACCORDING TO
$$C = \frac{L}{MAX} \times RN1$$

S18

S17 — +  ← VIDEO RN2, KEY5

S4 — ADJUST C ACCORDING TO $\hat{C} = C >> (13-B)$

S5 — CHANGE COEFFICIENTS BY $\hat{C}$ ACCORDING TO INVERTIBLE ALGORITHM 1 AND PRB DEFINED BY KEY 2

## FIG. 11

-128    -118        -108      -98        0  +2              +112    +127

+112        +120        +127

# FIG. 12

CREATE AC
TEMPLATE — S6

DO NOT | NO | IS COEFFICIENT
CHANGE | IDENTIFIED FOR
CHANGE AND IS IT
NON-ZERO? — S61

YES

NO | |COEFFICIENT|
< Ts ? | YES

S8 — SIGN
CHANGE
NOT
ALLOWED

S7

SIGN
CHANGE
ALLOWED — S9

CHANGE CODE
ACCORDING TO
INVERTIBLE
ALGORITHM 2
AND KEY 3 — S10

# FIG. 13

S11 — DETERMINE MAGNITUDE GROUP FOR COEFFICIENTS

S111 — DETERMINE INDEX OF COEFFICIENT IN GROUP

S12 — ADD RN3 TO INDEX (KEY 3)

S121 — SET COEFFICIENT TO VALUE POINTED TO BY NEW INDEX

## FIG. 14

S11 — DETERMINE MAGNITUDE GROUP FOR COEFFICIENTS

S111 — DETERMINE INDEX OF COEFFICIENT IN GROUP

S13 — ENCRYPT INDEX (KEY 3')

S121 — SET COEFFICIENT TO VALUE POINTED TO BY NEW INDEX

## FIG. 15

S14 — DETERMINE NUMBER OF BITS TO ENCODE A SEQUENCE OF COEFFICIENTS

S15 — FIND A PERMUTATION OF SEQUENCE WHICH DOES NOT CHANGE NUMBER OF BITS

S16 — IF PERMUTATION FOUND, CHANGE / NOT CHANGE DEPENDING ON PRB2 (KEY 4)

## FIG. 16

SC

TEMPLATE,
MAX / MIN FOR RN,
KEYS 1, 2, 3, 4
ALGORITHMS

SMART CARD

# FIG. 17

SC

18 — ENTROPY DECODE

17 — REMOVE WATERMARK

16 — $\overline{Q}$

15 — $\overline{DCT}$

19

INVERSE FILTER

12

# FIG. 18

CREATE AC TEMPLATE — S6'

IS COEFFICIENT IDENTIFIED FOR CHANGE AND IS IT NON-ZERO? — S61'

DO NOT CHANGE — NO

YES

CHANGE CODE ACCORDING TO INVERTIBLE ALGORITHM 2 AND KEY 3 — S10'

NO — |COEFFICIENT| < Ts ? — YES

S7

SIGN CHANGE NOT ALLOWED — S8'

SIGN CHANGE ALLOWED — S9'

## FIG. 19

EXAMPLE WATERMARKED IMAGE

FIG. 20

FIG. 21